# EUROPEAN PATENT APPLICATION

(11) **EP 4 790 805 A1**
(43) Date of publication of application: **12.08.2026**
(21) Application number: 25227562.3
(22) Date of filing: 30.12.2025
(51) Int. Cl.: H01M 50/204, H01M 50/211, H01M 50/229, H01M 50/242, H01M 50/289, H01M 50/231, H01M 50/249

(54) **STORAGE BATTERY APPARATUS**

(30) Priority: 05.02.2025 JP 2025017252
(71) Applicant: Toyota Jidosha Kabushiki Kaisha, Toyota-shi, Aichi-ken 471-8571 (JP)
(72) Inventor: INOUE, Shigeyuki, Toyota-shi, 471-8571 (JP); SUGIE, Kazuki, Toyota-shi, 471-8571 (JP); KUMAZAWA, Kazuya, Toyota-shi, 471-8571 (JP)
(74) Representative: TBK

(57) **Abstract**

A storage battery apparatus (100, 200, 300, 400, 500, 600) that suppresses effects on the storage battery apparatus interior caused by the application of a load from outside, while restraining an increase in weight of the storage battery apparatus. The storage battery apparatus (100, 200, 300, 400, 500, 600) is provided with plural storage cells (111), a first cover (130) disposed below the storage cells (111), and a second cover (140) disposed below the first cover (130). A first resin member (141) is provided that is disposed to extend in a first direction between the first cover (130) and the second cover (140). The first resin member (141) is in contact with the first cover (130), and the first resin member (141) is in contact with the second cover (140).

## Description

### BACKGROUND

### Technical Field

The present disclosure relates to a storage battery apparatus, and particularly to a storage battery apparatus to be mounted at a vehicle.

### Related Art

Heretofore, various structures of a storage battery apparatus have been proposed for suppressing effects on the interior of the storage battery apparatus caused by the application of loads from outside (for example, interference with a road surface and the like).

For example, a storage battery apparatus recited in Japanese Patent Application Laid-Open (JP-A) No. 2023-046705 is disclosed as being provided with a lower case and a share panel that is disposed below the lower case.

In a storage battery apparatus structured as mentioned above, rigidity of the share panel (a protective panel) must be improved in order to suppress effects on the interior of the storage battery apparatus caused by the application of stronger loads from outside. However, this may increase the weight of the storage battery apparatus.

The present disclosure provides a storage battery apparatus that suppresses effects on the storage battery apparatus interior due to the application of a load from outside while restraining an increase in weight of the storage battery apparatus.

### SUMMARY

A storage battery apparatus according to a first aspect includes: plural storage cells; a first cover disposed below the plural storage cells; a second cover disposed below the first cover; and a first resin member disposed between the first cover and the second cover, the first resin member being in contact with both the first cover and the second cover.

According to the storage battery apparatus according to the first aspect, the first resin member that is in contact with both the first cover and the second cover is provided. As a result, overall rigidity of the first cover and second cover may be improved while an increase in weight of the storage battery apparatus is restrained compared to a structure that employs a member made of metal between the first cover and the second cover. Therefore, when a load is applied from outside the storage battery apparatus, effects on the storage battery apparatus interior may be suppressed.

In a storage battery apparatus according to a second aspect, in the first aspect, the first resin member is disposed to extend in a first direction that is orthogonal to a vertical direction.

According to the storage battery apparatus according to the second aspect, the first member is disposed to extend in the first direction that is orthogonal to a vertical direction. As a result, overall rigidity of the first cover and second cover may be improved across a range in which the first resin member extends in the first direction. Therefore, when a load is applied from outside the storage battery apparatus, effects on the storage battery apparatus interior may be suppressed further.

In a storage battery apparatus according to a third aspect, in the second aspect, the first resin member is disposed at an inner side relative to respective peripheral edge portions of the first cover and the second cover.

According to the storage battery apparatus according to the third aspect, the first resin member is disposed at inner sides relative to the respective peripheral edge portions of the first cover and the second cover. As a result, rigidity of the first cover and second cover may be improved at the inner sides relative to the respective peripheral edge portions of the first cover and second cover. Therefore, when a load from outside the storage battery apparatus is applied at the inner side relative to the respective peripheral edge portions of the first cover and second cover on which the storage cells are disposed, effects on the storage battery apparatus interior may be suppressed further.

In a storage battery apparatus according to a fourth aspect, in the second aspect, the first resin member is plurally provided, the plural first resin members being disposed in a row in a second direction that is orthogonal to both the vertical direction and the first direction.

According to the storage battery apparatus according to the fourth aspect, a plural number of the first resin member are provided, and the plural first resin members are disposed in a row in the second direction that is orthogonal to both the vertical direction and the first direction. As a result, plural locations are provided to which a load can be transmitted when the second cover is deformed upward. Therefore, rigidity of the first cover and second cover may be improved even while space between the first cover and second cover to allow the second cover to deform and absorb an applied load is reduced. Thus, when a load is applied from outside the storage battery apparatus, effects on the storage battery apparatus interior may be suppressed further.

In a storage battery apparatus according to a fifth aspect, in the second aspect, the first resin member is joined to both the first cover and the second cover.

According to the storage battery apparatus according to the fifth aspect, the first resin member is joined to both the first cover and the second cover. Thus, joining locations between the first cover and the second cover may be increased in number without a number of fastening components increasing. Therefore, joining strength between the first cover and the second cover may be improved while effects on the storage battery apparatus interior when a load is applied from outside the storage battery apparatus may be suppressed.

In a storage battery apparatus according to a sixth aspect, any one of the second to fifth aspects further includes a first reinforcement disposed to extend in the first direction at one side of the storage cells in a second direction that is perpendicular to the first direction, wherein the first resin member is disposed to be superposed with the first reinforcement as seen in the vertical direction.

According to the storage battery apparatus according to the sixth aspect, the first resin member is disposed to be superposed with the first reinforcement as seen in the vertical direction. Thus, for example, when a load is applied to the storage battery apparatus from below, a load that acts on the storage battery apparatus interior via the first resin member is transmitted to the reinforcement that has relatively high rigidity. Therefore, when a load is applied from outside the storage battery apparatus, effects on the storage battery apparatus interior may be suppressed further.

In a storage battery apparatus according to a seventh aspect, in the sixth aspect, the first resin member is disposed to be superposed with the storage cells as seen in the vertical direction.

According to the storage battery apparatus according to the seventh aspect, the first resin member is disposed to be superposed with the storage cells as seen in the vertical direction. Thus, when a load is applied to the storage battery apparatus from outside, an excessive deformation amount of the second cover below the storage cells may be suppressed, and effects on the storage battery apparatus interior may be suppressed further.

In a storage battery apparatus according to an eighth aspect, in the sixth aspect, the first resin member includes a first fiber-containing resin member that includes a fiber material, the first fiber-containing resin member being disposed to be superposed with the storage cells as seen in the vertical direction.

According to the storage battery apparatus according to the eighth aspect, the first fiber-containing resin member is disposed to be superposed with the storage cells as seen in the vertical direction. As a result, overall strength of the first cover and second cover below the storage cells is improved. Therefore, for example, when a load is applied to the storage battery apparatus from below, effects on the storage battery apparatus interior may be more excellently suppressed even further.

In a storage battery apparatus according to a ninth aspect, the sixth aspect further includes a second resin member between the first cover and the second cover, the second resin member being disposed to extend in the first direction, wherein the second resin member is in contact with both the first cover and the second cover, and wherein the second resin member has a smaller Young's modulus than the first resin member.

According to the storage battery apparatus according to the ninth aspect, because the second resin member has a smaller Young's modulus than the first resin member, regions are formed that transmit relatively more of a load on the second cover and regions are formed that absorb relatively more of the load on the second cover. Thus, deformation locations of the second cover may be specified easily. Therefore, when a load is applied to the storage battery apparatus from outside, effects on the storage battery apparatus interior may be suppressed further.

In a storage battery apparatus according to a tenth aspect, the sixth aspect further includes a second resin member between the first cover and the second cover, the second resin member being disposed to extend in the first direction, wherein the second resin member includes an adhesive material, and wherein the second resin member is joined to both the first cover and the second cover.

According to the storage battery apparatus according to the tenth aspect, the second resin member is joined to both the first cover and the second cover. Thus, joining locations between the first cover and the second cover may be increased in number without a number of fastening components increasing. Therefore, joining strength between the first cover and the second cover may be improved while effects on the storage battery apparatus interior when a load is applied to the storage battery apparatus from outside are suppressed.

In a storage battery apparatus according to an eleventh aspect, in the tenth aspect, the first resin member is plurally disposed in a row in the second direction, the second direction intersecting the first direction, and the second resin member is disposed to be interspersed with the plural first resin members.

According to the storage battery apparatus according to the eleventh aspect, a plural number of the first resin member are disposed in a row in the second direction that intersects the first direction, and the second resin member is disposed between the plural first resin members. As a result, overall rigidity of the first cover and second cover may be improved, and space to allow the first cover or second cover to deform and absorb an impact when a load is applied to the storage battery apparatus from outside may be reduced. Therefore, effects on the storage battery apparatus interior when a load is applied to the storage battery apparatus from outside may be suppressed, while an increase in size of the storage battery apparatus is suppressed.

In a storage battery apparatus according to a twelfth aspect, in any one of the ninth to eleventh aspects, the second resin member is disposed to be superposed with the first reinforcement in the vertical direction.

According to the storage battery apparatus according to the twelfth aspect, the second resin member is disposed to be superposed with the first reinforcement in the vertical direction. Thus, the second cover may be joined to the first cover below the reinforcement that has relatively high rigidity, and rigidity of the first cover and second cover may be improved. Therefore, when a load is applied to the storage battery apparatus from outside, effects on the storage battery apparatus interior may be suppressed further.

In a storage battery apparatus according to a thirteenth aspect, the twelfth aspect further includes a second reinforcement disposed to extend in the first direction at another side of the storage cells in the second direction, wherein the first fiber-containing resin member is disposed to extend in the second direction from the first reinforcement to the second reinforcement as seen in the first direction.

According to the storage battery apparatus according to the thirteenth aspect, as seen in the first direction, the first fiber-containing resin member is disposed to extend from the first reinforcement to the second reinforcement in the second direction. As a result, overall strength of the first cover and second cover is improved between the first reinforcement and second reinforcement on which the storage cells are disposed. Therefore, for example, when a load is applied from below the storage battery apparatus, effects on the storage battery apparatus interior may be suppressed further.

A storage battery apparatus according to a fourteenth aspect further includes a second fiber-containing resin member that includes a fiber material, wherein the second fiber-containing resin member is disposed to be superposed with the storage cells as seen in the vertical direction, and is joined to an upper face of the first cover.

According to the storage battery apparatus according to the fourteenth aspect, the second fiber-containing resin member is disposed to be superposed with the storage cells as seen in the vertical direction, and is joined to the upper face of the first cover. Thus, overall strength of the first cover and second cover below the storage cells is improved. Therefore, when a load is applied from outside the storage battery apparatus, effects on the storage battery apparatus interior, particularly on the storage cells, may be suppressed further.

In a storage battery apparatus according to a fifteenth aspect, the twelfth aspect further includes a wire member disposed to extend in the first direction, wherein the first resin member is joined to the first cover and the second cover, and wherein the wire member is disposed at one side of the first resin member in the second direction.

According to the storage battery apparatus according to the fifteenth aspect, the wire member is disposed at one side in the second direction of the first resin member. Thus, if the second cover has been damaged by application of a load from outside the storage battery apparatus, joining of the second cover to the first cover may be easily released. Therefore, when a load is applied from outside the storage battery apparatus, effects on the storage battery apparatus interior, particularly on the storage cells, may be suppressed further even while ease of servicing of the storage battery apparatus may be improved.

In a storage battery apparatus according to a sixteenth aspect, the twelfth aspect further includes a wire member disposed to extend in the first direction, wherein the first resin member is joined to the first cover and the second cover, and wherein the wire member is covered by the first resin member.

According to the storage battery apparatus according to the sixteenth aspect, the wire member is covered by the first resin member. Thus, if the second cover has been damaged by application of a load from outside the storage battery apparatus, joining of the second cover to the first cover may be easily released. Therefore, when a load is applied from outside the storage battery apparatus, effects on the storage battery apparatus interior, particularly on the storage cells, may be suppressed further even while ease of servicing of the storage battery apparatus may be improved.

A storage battery apparatus vehicle mounting structure according to a seventeenth aspect includes the storage battery apparatus according to the twelfth aspect wherein, as seen in a vehicle width direction, the first fiber-containing resin member is disposed to extend in a vehicle front-and-rear direction from an end portion at the vehicle front side of the plural storage cells to a central portion of the plural storage cells.

According to the storage battery apparatus vehicle mounting structure according to the seventeenth aspect, as seen in the vehicle width direction, the first fiber-containing resin member is disposed to extend in the vehicle front-and-rear direction from the end portion at the vehicle front side of the plural storage cells to the central portion of the plural storage cells. As a result, overall strength of the first cover and the second cover is improved in a region at the vehicle front side of the storage battery apparatus, which is a region at which application of a load to the storage battery apparatus from outside is relatively more likely to occur, due to road surface interference or the like. Therefore, when a load is applied to the storage battery apparatus from outside, effects on the storage battery apparatus interior may be suppressed further.

In a storage battery apparatus vehicle mounting structure according to an eighteenth aspect, in the seventeenth aspect, the plural storage cells further include an intermediary member disposed between an adjacent pair of the storage cells and, as seen in the vehicle width direction, the first fiber-containing resin member is disposed to extend in the vehicle front-and-rear direction from the end portion at the vehicle front side of the plural storage cells to the intermediary member.

According to the storage battery apparatus vehicle mounting structure according to the eighteenth aspect, as seen in the vehicle width direction, the first fiber-containing resin member is disposed to extend in the vehicle front-and-rear direction from the end portion at the vehicle front side of the plural storage cells to the intermediary member. As a result, overall strength of the first cover and the second cover is improved in a region at the vehicle front side of the storage battery apparatus, which is a region at which application of a load to the storage battery apparatus from outside is relatively more likely to occur, due to road surface interference or the like. Therefore, when a load is applied to the storage battery apparatus from outside, effects on the storage battery apparatus interior may be suppressed further.

According to the storage battery apparatus according to the present disclosure, a storage battery apparatus may be provided that suppresses effects on the storage battery apparatus interior caused by the application of a load from outside while restraining an increase in weight of the storage battery apparatus.

### BRIEF DESCRIPTION OF THE DRAWINGS

Exemplary embodiments of the present invention will be described in detail based on the following figures, wherein:
Fig. 1 is an exploded perspective view showing schematics of a storage battery apparatus vehicle mounting structure according to a first exemplary embodiment;
Fig. 2 is an exploded perspective view showing schematics of a storage battery apparatus that is shown in Fig. 1;
Fig. 3 is a perspective view showing a storage battery module that is shown in Fig. 2;
Fig. 4 is a sectional diagram of the storage battery apparatus shown in Fig. 1, seen in a vehicle front-and-rear direction;
Fig. 5 is a view, seen in the vehicle front-and-rear direction, in which a reinforcement 131 that is shown in Fig. 4 is magnified;
Fig. 6 is a sectional diagram, seen in the vehicle front-and-rear direction, in which a vehicle width direction right side portion of a vehicle mounting structure for a storage battery apparatus 100 that is shown in Fig. 1 is magnified;
Fig. 7 is a sectional diagram in which the vehicle mounting structure for the storage battery apparatus 100 that is shown in Fig. 1 is seen in the vehicle width direction;
Fig. 8 is a sectional diagram in which a storage battery apparatus according to a second exemplary embodiment is seen in the vehicle front-and-rear direction;
Fig. 9 is a sectional diagram in which a storage battery apparatus according to a third exemplary embodiment is seen in the vehicle width direction;
Fig. 10 is a sectional diagram in which a storage battery apparatus according to a fourth exemplary embodiment is seen in the vehicle front-and-rear direction;
Fig. 11 is a sectional diagram in which a storage battery apparatus according to a fifth exemplary embodiment is seen in the vehicle front-and-rear direction; and
Fig. 12 is a sectional diagram in which the storage battery apparatus according to the fifth exemplary embodiment is seen in the vehicle front-and-rear direction.

### DETAILED DESCRIPTION

Below, the storage battery apparatus 100 according to a present exemplary embodiment is described with reference to the drawings. An arrow UP, an arrow FR and an arrow RH that are shown as appropriate in the drawings indicate, respectively, an upper direction in the vehicle vertical direction of a vehicle in which the storage battery apparatus is mounted, a front direction in the vehicle front-and-rear direction, and a right direction in a vehicle left-and-right direction (vehicle width direction). Where simply the directions upper, lower, front, rear, left and right are used in the descriptions below, unless specifically described otherwise, these indicate, respectively, upper and lower in the vehicle vertical direction, front and rear in the vehicle front-and-rear direction, and left and right in the vehicle left-and-right direction (vehicle width direction). Furthermore, where the positional relationships above, below, forward, rearward, leftward and rightward are used, unless specifically described otherwise, these indicate, respectively, above and below in the vehicle vertical direction, forward and rearward in the vehicle front-and-rear direction, and leftward and rightward in the vehicle left-and-right direction (the vehicle width direction).

Unless particularly specified in this Description, each element is not limited to being a single element but may be plurally provided. In the drawings, the same reference symbol is assigned to elements that are substantially the same, and duplicative descriptions are omitted from the Description.

### - First Exemplary Embodiment -

### Overall Structure

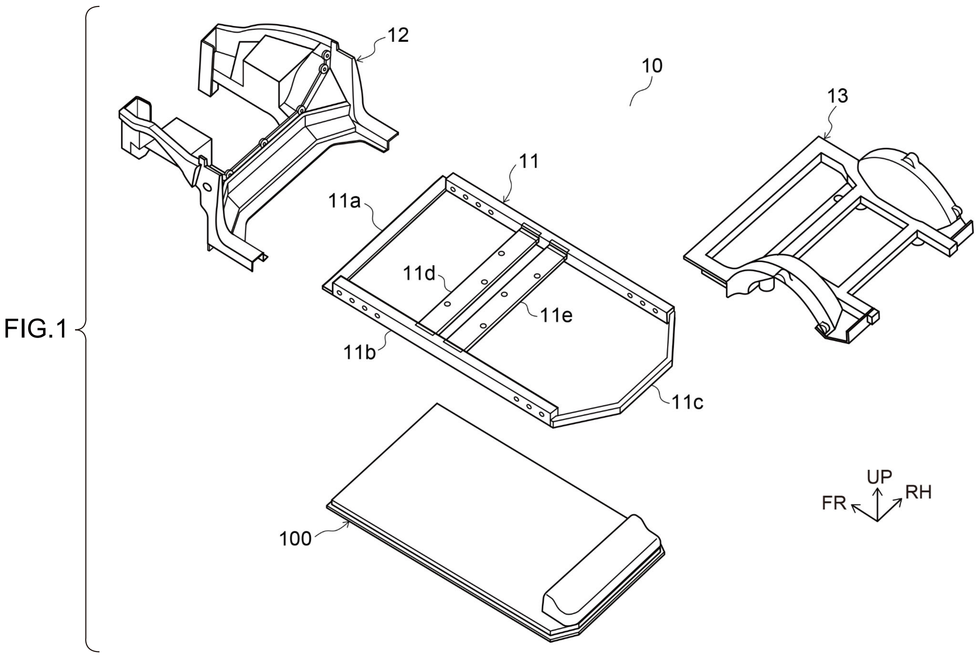

Fig. 1 is an exploded perspective view showing schematics of a vehicle mounting structure of the storage battery apparatus 100 according to the present exemplary embodiment. As shown in Fig. 1, the storage battery apparatus 100 is mounted below a vehicle framework 10. For example, peripheral edge portions of the storage battery apparatus 100 are joined to the vehicle framework 10.

The vehicle framework 10 includes a center module 11, a front module 12 disposed forward of the center module 11, and a rear module 13 to rearward of the center module 11. The front module 12 and the rear module 13 may each be formed by joining plural framework members together, or partial frameworks may be integrally formed by a method such as casting or the like.

The center module 11 includes a pair of side frame members 11b, a front frame member 11a, a rear frame member 11c, and plural seat cross members 11d and 11e. The side frame members 11b are disposed at two end portions of the center module 11 in the left-and-right direction, and each extends in the front-and-rear direction. The front frame member 11a is disposed with a length direction in the left-and-right direction and is connected to respective front end portions of the pair of side frame members 11b. The rear frame member 11c is disposed with a length direction in the left-and-right direction and is connected to respective rear end portions of the pair of side frame members 11b. The seat cross members 11d and 11e extend in the left-and-right direction and are arrayed in the front-and-rear direction. At the plural seat cross members 11d and 11e, both left-and-right direction ends of each of the front seat cross member 11d that is disposed at the front side and the rear seat cross member 11e that is disposed at the rear side are joined to the pair of side frame members 11b. Seats (chairs) are fixed to the seat cross members 11d and 11e.

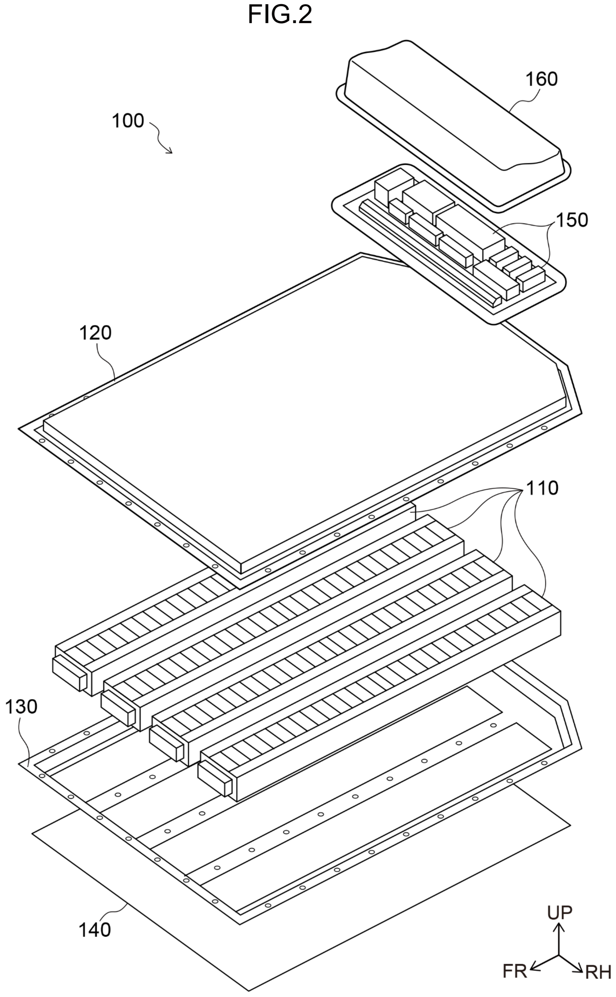

Fig. 2 is an exploded perspective view showing schematics of the storage battery apparatus 100 that is shown in Fig. 1. The storage battery apparatus 100 is provided with plural storage battery modules 110. For example, the plural storage battery modules 110 are plurally disposed in a row in the left-and-right direction. As described below, as an example, each storage battery module 110 contains plural storage cells that that are disposed in a row in the front-and-rear direction. The plural storage battery modules 110 may be disposed in a row in the front-and-rear direction, in which case the plural storage cells may be disposed in rows in the left-and-right direction.

The storage battery modules 110 are accommodated in a case that is structured by an upper cover 120 and a lower cover 130. The upper cover 120 and lower cover 130 are, for example, joined together by a publicly known method such as fastening, an adhesive material or the like. More specifically, the upper cover 120 is disposed above the storage cells. The lower cover 130, which serves as a first cover, is disposed below the storage cells.

A protective panel 140, which serves as a second cover, is provided below the lower cover 130. As described below, the protective panel 140 is joined to the lower cover 130 by, for example, a publicly known method such as fastening, an adhesive material or the like.

The upper cover 120 may separate at least some of a vehicle cabin interior and exterior in at least a region at the front side relative to a front-and-rear direction central portion of the upper cover 120, performing the function of a floor panel. In this structure, the upper cover 120 is joined to the front seat cross member 11d or rear seat cross member 11e using, for example, a publicly known method such as fastening or the like.

Battery equipment 150 is disposed above the upper cover 120 at least in a region at the rear side relative to the front-and-rear direction central portion of the upper cover 120. The battery equipment is electrically connected to, for example, sensors and the like. The sensors detect conditions such as temperature, voltage, current and the like of storage cells, which are described in more detail below. As an example, the battery equipment 150 includes one or more selected from a battery management system (BMS), an electronic control unit (ECU), a DC-DC converter, a system main relay (SMR) and the like.

The battery equipment 150 is covered from above by an equipment cover 160. The equipment cover 160 is joined to an equipment stand on which the battery equipment 150 is disposed. Thus, the equipment cover 160 accommodates the battery equipment 150. The equipment cover 160 may be joined to the upper cover 120 to accommodate the battery equipment 150.

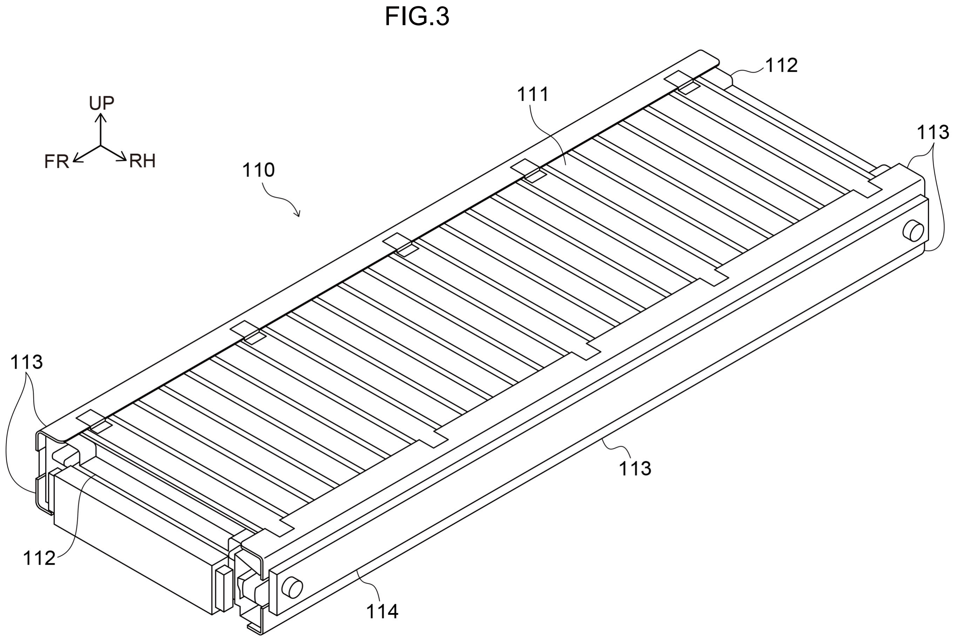

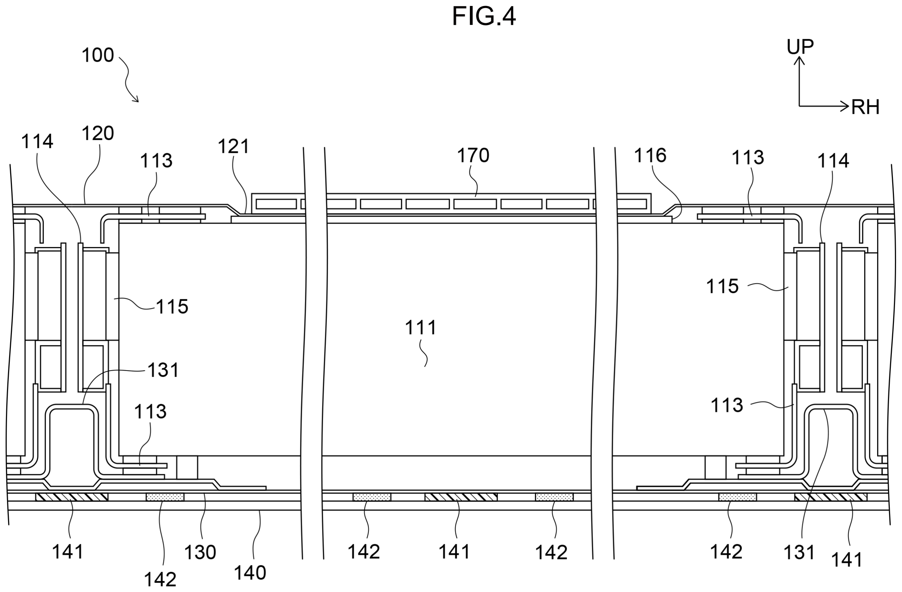

Fig. 3 is a perspective view showing each storage battery module 110 shown in Fig. 2. Fig. 4 is a sectional diagram of the storage battery apparatus 100 that is shown in Fig. 1, seen in the vehicle front-and-rear direction. As shown in Fig. 3 and Fig. 4, the storage battery module 110 is structured with plural storage cells 111 arrayed in a row in the front-and-rear direction. The storage cells 111 may each be provided with electrode terminals 115 at, for example, both ends in the left-and-right direction. The electrode terminals 115 of each storage cell 111 are not limited to being provided at both ends in the left-and-right direction but may be provided only at one end in the left-and-right direction. The electrode terminals 115 of the storage cell 111 may instead be provided at both ends in a vertical direction, and may be provided only at one end in the vertical direction. The storage battery module 110 according to the first exemplary embodiment illustrates an example in which the storage battery module 110 includes a plural number of the storage cells 111 disposed in a row in the front-and-rear direction. However, it is sufficient that the storage battery module 110 includes a plural number of the storage cells 111. The storage battery module 110 is not limited to the mode according to the present exemplary embodiment.

Inter-cell members may be disposed between adjacent storage cells 111. Each inter-cell member may be, for example, a cooler, a heat-shielding member, an electrical insulation member or a resilient member. Buffer members, which are described in more detail below, may be disposed between at least some adjacent storage cells 111. When the storage battery module 110 is structured with the buffer members, displacement of the storage cells 111 in the front-and-rear direction within the storage battery module 110 may be more assuredly suppressed.

A pair of end plates 112 are disposed at each of two ends of the storage cells 111 that are plurally disposed in a row in the front-and-rear direction. The pair of end plates 112 are linked by a pair of side plates 113 and constrain displacement of the plural storage cells 111 in the front-and-rear direction.

The storage cells 111 that are plurally disposed in a row in the front-and-rear direction may have a cell-to-pack (CTP) structure in which a portion of a face of a case accommodating the storage battery apparatus 100 is disposed at least at one end portion of the storage cells 111. Thus, efficient use of space inside the storage battery apparatus may be improved.

The storage cells 111 that are plurally disposed in a row in the front-and-rear direction may have a cell-to-chassis (CTC) structure in which a portion of the vehicle framework 10 is disposed at least at one end portion of the storage cells 111. Thus, efficient use of space inside the storage battery apparatus may be improved and the plural storage cells may be more securely retained.

A bus bar module 114 is provided at the electrode terminals 115 of the storage cells 111. The bus bar module 114 electrically connects between the electrode terminals 115 of the adjacent storage cells 111. For example, the bus bar module 114 electrically connects between the electrode terminals 115 of the adjacent storage cells 111 and forms portions of a circuit. However, the bus bar module 114 is not limited to connecting between the electrode terminals 115 of adjacent storage cells 111 and may electrically connect between the electrode terminals 115 of storage cells 111 in the storage battery module 110 that are not adjacent.

The reinforcement 131 is plurally provided on the upper face of the lower cover 130. The reinforcements 131 are spaced apart in the left-and-right direction and each serve as a first reinforcement or second reinforcement extending in the front-and-rear direction. The storage battery modules 110 provided with the plural storage cells 111 are disposed between the plurally provided reinforcements 131. Each storage battery module 110 is joined to the reinforcements 131 via, for example, adhesive material. Rather than adhesive material, the storage battery modules 110 may be joined to the reinforcements 131 by a publicly known method such as fastening, welding or the like.

In the structure described above, gaps are formed in the vertical direction in at least portions between the storage cells 111 and the lower cover 130. For example, with a structure in which distances between the storage cells 111 and the lower cover 130 in the vertical direction are greater than distances between the lower cover 130 and the protective panel 140 in the vertical direction, which are described in more detail below, application of a load to the storage cells 111 when the lower cover 130 or protective panel 140 deforms toward the side thereof at which the storage cells are disposed may be inhibited.

The lower cover 130 may have a board shape with a thickness in the vertical direction of at least 0.5 mm and at most 5 mm. The thickness is more preferably at least 0.5 mm and at most 3 mm, and even more preferably at least 0.5 mm and at most 1 mm.

The lower cover 130 is constituted of, for example, iron, and may be constituted of aluminium. The lower cover 130 is not limited to iron and may be constituted of, for example, a compound such as an alloy including iron or aluminium, or the like.

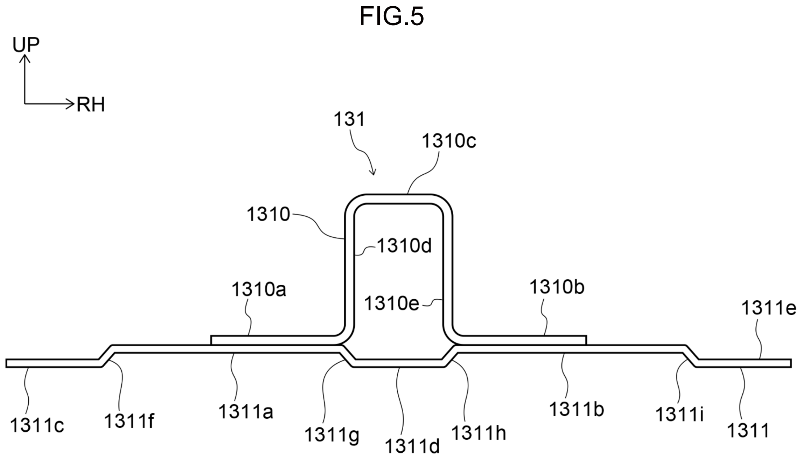

Fig. 5 is a view, seen in the vehicle front-and-rear direction, in which the reinforcement 131 that is shown in Fig. 4 is magnified. As shown in Fig. 5, each reinforcement 131 is structured by plural members: an upper side reinforcement 1310 and a lower side reinforcement 1311. The upper side reinforcement 1310 includes a first flat portion 1310a, a second flat portion 1310b, a third flat portion 1310c that is disposed upward of the first flat portion 1310a and the second flat portion 1310b, a first linking portion 1310d that links the first flat portion 1310a with the third flat portion 1310c, and a second linking portion 1310e that links the second flat portion 1310b with the third flat portion 1310c. The lower side reinforcement 1311 includes a fourth flat portion 1311a, a fifth flat portion 1311b, a sixth flat portion 1311c, a seventh flat portion 1311d and eighth flat portion 1311e that are disposed downward relative to the fourth flat portion 1311a and fifth flat portion 1311b, a third linking portion 1311f that links the fourth flat portion 1311a with the sixth flat portion 1311 c, a fourth linking portion 1311g that links the fourth flat portion 1311 a with the seventh flat portion 1311d, a fifth linking portion 1311h that links the fifth flat portion 1311b with the seventh flat portion 1311d, and a sixth linking portion 1311i that links the fifth flat portion 1311b with the eighth flat portion 1311e.

The reinforcement 131 is formed of the upper side reinforcement 1310 and lower side reinforcement 1311 by the first flat portion 1310a being welded to the fourth flat portion 1311a and the second flat portion 1310b being welded to the fifth flat portion 1311b. The above description illustrates an example in which the upper side reinforcement 1310 and lower side reinforcement 1311 are joined by welding, but the same may be joined by another publicly known method such as fastening, adhesion or the like. Alternatively, the upper side reinforcement 1310 and lower side reinforcement 1311 may be formed integrally by a method such as casting, extrusion or the like.

Then, as shown in Fig. 4 and Fig. 5, the bus bar module 114 that electrically connects the electrode terminals 115 provided at the storage cells 111 is disposed to be superposed with the third flat portion 1310c in the vertical direction. The electrode terminals 115 provided at the storage cells 111 may also be disposed to be superposed with the third flat portion 1310c as seen in the vertical direction.

The upper cover 120 is provided above the storage cells 111. A recess portion 121 is formed in the upper cover 120 at a position opposing the storage cells 111. A cooler 170 is disposed above the recess portion 121, in contact with the recess portion 121. A thermal conduction member 116 is disposed below the recess portion 121, in contact with both the storage cells 111 and the upper cover 120.

The protective panel 140 has a board shape and is joined below the lower cover 130. A gap is provided between the protective panel 140 and the lower cover 130.

The protective panel 140 is constituted of, for example, aluminium, and may be constituted of iron. The protective panel 140 is not limited to iron and may be constituted of, for example, a compound such as an alloy including iron or aluminium, or the like.

The protective panel 140 may have a thickness in the vertical direction of at least 1 mm and at most 5 mm. The thickness is more preferably at least 2 mm and at most 4 mm.

First resin members 141 and second resin members 142 are disposed between the protective panel 140 and the lower cover 130. The first resin members 141 and the second resin members 142 are each disposed in contact with both the lower cover 130 and the protective panel 140.

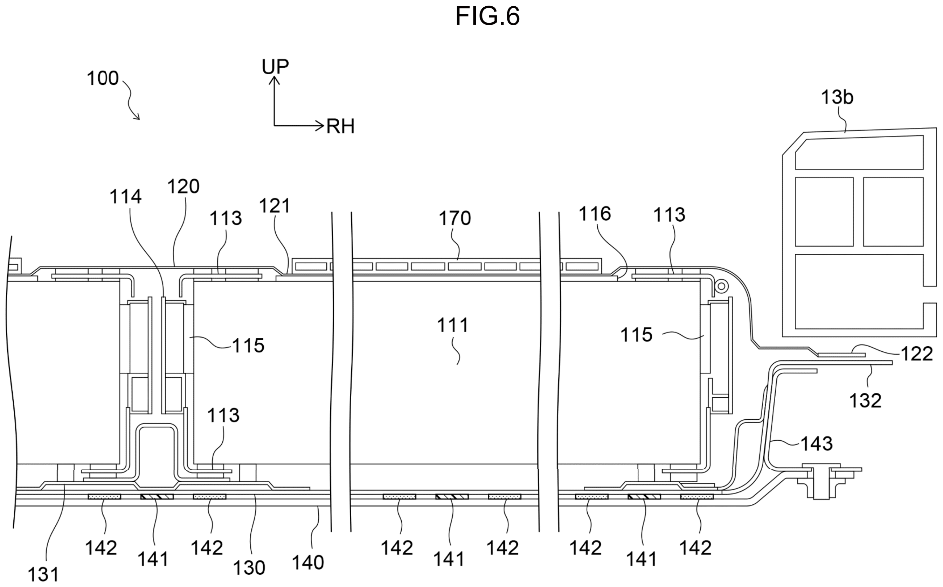

Fig. 6 is a sectional diagram, seen in the vehicle front-and-rear direction, in which a vehicle width direction right side portion of a vehicle mounting structure of the storage battery apparatus 100 that is shown in Fig. 1 is magnified. The upper cover 120 is provided with an upper flange portion 122 at outer periphery portions of the storage battery apparatus 100. The lower cover 130 is provided with a lower flange portion 132 at the outer periphery portions of the storage battery apparatus 100. The upper flange portion 122 and the lower flange portion 132 are joined together. Thus, the storage battery modules 110 are accommodated.

The lower cover 130 includes brackets 143 that are joined to side faces of the lower cover 130. The protective panel 140 is joined to the lower cover 130 by the brackets 143.

Portions at both ends in the left-and-right direction of the storage battery apparatus 100, which are formed by the upper flange portion 122 and lower flange portion 132 being superposed in the vertical direction, are joined to side frame members 13b. Thus, the storage battery apparatus 100 is fixed to the vehicle framework 10.

Joining portions between the upper flange portion 122 and the lower flange portion 132 and joining portions between the protective panel 140 and the brackets 143 are disposed to be superposed in the vertical direction.

The first resin members 141 and second resin members 142 are disposed at inner sides of the storage battery apparatus 100 in the vehicle width direction relative to peripheral edge portions of the upper cover 120 and peripheral edge portions of the lower cover 130. These peripheral edge portions are, for example, the joining portions between the upper flange portion 122 and the lower flange portion 132.

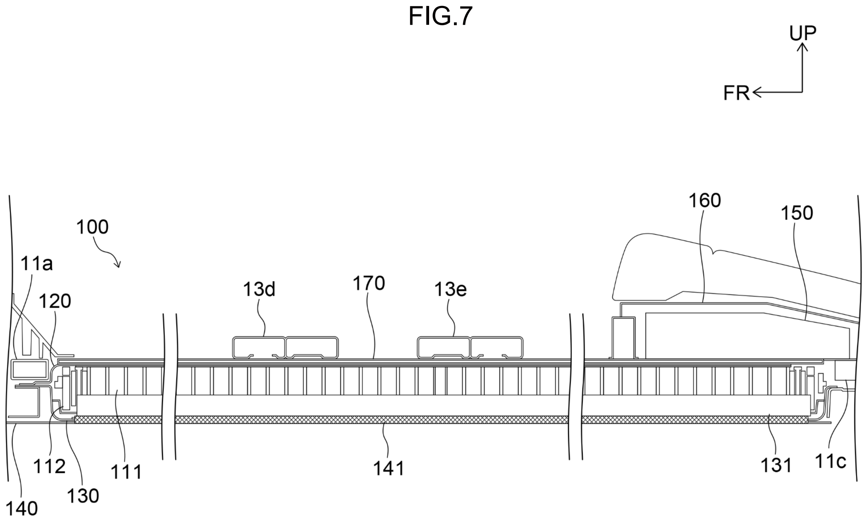

Fig. 7 is a sectional diagram in which the vehicle mounting structure of the storage battery apparatus 100 that is shown in Fig. 1 is seen in the vehicle width direction. As shown in Fig. 7, the storage battery apparatus 100 is disposed below a front seat cross member 13d and a rear seat cross member 13e.

A plural number of the storage cells 111 are disposed to be stacked in the vehicle front-and-rear direction. Each first resin member 141 extends in the vehicle front-and-rear direction and is disposed to be superposed with the plural storage cells 111 in the vertical direction. The above description illustrates an example in which the plural storage cells 111 are plurally disposed in a row in the front-and-rear direction and the first resin member 141 is disposed to extend in the front-and-rear direction. However, the plural storage cells 111 may be plurally disposed in a row in the left-and-right direction and the first resin members 141 may be disposed to extend in the front-and-rear direction.

The first resin members 141 and second resin members 142 are disposed at the inner sides of the storage battery apparatus 100 in the vehicle front-and-rear direction relative to the peripheral edge portions of the upper cover 120 and the peripheral edge portions of the lower cover 130. These peripheral edge portions are, for example, the joining portions between the upper flange portion 122 and the lower flange portion 132.

### Structures of Principal Elements

Returning to Fig. 4, each of the first resin members 141 and second resin members 142 is described in more detail. As mentioned above, the first resin member 141 and the second resin member 142 are disposed between the lower cover 130 and the protective panel 140. The first resin member 141 and the second resin member 142 each has a rectangular shape provided to extend in the vehicle front-and-rear direction.

The first resin member 141 may have a width in the left-and-right direction of at least 3 mm and at most 20 mm. The width is more preferably at least 5 mm and at most 20 mm, and even more preferably at least 10 mm and at most 20 mm.

The first resin member 141 may have a thickness in the vertical direction of at least 1 mm and at most 5 mm. The thickness is more preferably at least 2 mm and at most 4 mm.

The first resin member 141 may be constituted with, for example, one or more resins selected from the group consisting of at least polyethylenes (PE), polypropylenes (PP), PE foams, PP foams, glass fiber-reinforced plastics (GFRP), carbon fiber-reinforced plastics (CFRP) and the like.

The first resin member 141 may be joined to the lower cover 130 via an adhesive material at the upper face of the first resin member 141. The first resin member 141 may be joined to the protective panel 140 via an adhesive material at the lower face of the first resin member 141. Unless specifically mentioned otherwise in this Description, the meaning of "is in contact" is intended to include at least a portion being in contact and is intended to encompass contact over the whole of opposing surfaces.

The first resin member 141 may be constituted of a resin with adhesiveness, for example, one or more adhesive materials selected from the group consisting of at least urethane-based adhesive materials, epoxy-based adhesive materials, silicone-based adhesive materials, acryl-based adhesive materials and the like. With this constitution, one or both of the upper face and lower face of the first resin member 141 may be joined to, respectively, the lower cover 130 or protective panel 140 without a separate adhesive material being provided.

The second resin member 142 may be disposed with at least a portion in contact with matching locations of both the lower cover 130 and the protective panel 140.

The second resin member 142 may have a width in the left-and-right direction of at least 3 mm and at most 20 mm. The width is more preferably at least 5 mm and at most 20 mm, and even more preferably at least 10 mm and at most 20 mm.

The second resin member 142 may have a thickness in the vertical direction of at least 1 mm and at most 5 mm. The thickness is more preferably at least 2 mm and at most 4 mm.

The second resin member 142 is constituted with a lower Young's modulus than the first resin member 141. The second resin member 142 may be constituted of, for example, one or more resins selected from the group consisting of at least polyethylenes (PE), polypropylenes (PP), PE foams, PP foams, glass fiber-reinforced plastics (GFRP), carbon fiber-reinforced plastics (CFRP) and the like.

The second resin member 142 may include an adhesive material. The second resin member 142 may be constituted with, for example, one or more adhesive materials selected from the group consisting of at least urethane-based adhesive materials, epoxy-based adhesive materials, silicone-based adhesive materials, acryl-based adhesive materials and the like. With this constitution, one or both of the upper face and lower face of the second resin member 142 may be joined to, respectively, the lower cover 130 or protective panel 140 without a separate adhesive material being provided.

The second resin member 142 may be constituted to have greater adhesive strength to the lower cover 130 or protective panel 140 than the first resin member 141. As a result, the second resin member 142 may be joined to the lower panel and the protective panel more securely.

The second resin member 142 extends in the front-and-rear direction and is disposed to be superposed with the plural storage cells 111 in the vertical direction. The second resin member 142 is disposed to be superposed with the reinforcement 131 in the vertical direction. The second resin member 142 is disposed to be superposed with the storage cells 111 in the vertical direction at central portions in the left-and-right direction of the storage cells 111.

The plural first resin members 141 are disposed in a row in the left-and-right direction. The first resin members 141 are disposed to be interspersed with the plural second resin members 142 in the left-and-right direction.

The plural second resin members 142 are disposed in a row in the left-and-right direction. The second resin members 142 are disposed to be interspersed with the plural first resin members 141 in the left-and-right direction.

Now, a method of fabricating the storage battery apparatus according to the present exemplary embodiment is described. More specifically, an example of steps for disposing the first resin members and second resin members between the lower cover 130 and protective panel 140 and joining the first resin members and second resin members to the lower cover 130 and protective panel 140 is described.

Firstly, the first resin members 141 are disposed on at least one of the lower cover 130 and the protective panel 140. The first resin members are joined to the at least one of the lower cover 130 and protective panel 140 by, for example, an adhesive material in a sheet form such as double-sided tape or the like.

Then, the second resin members 142 are disposed on at least one of the lower cover 130 and the protective panel 140. The second resin members are, for example, applied to the at least one of the lower cover 130 and protective panel 140 in the form of a paste including an adhesive material.

Then, the lower cover 130 and protective panel 140 are disposed to be superposed such that their respective thickness directions match up, and the lower cover 130 and protective panel 140 are joined by the adhesive material included in the second resin members 142. Hence, because the sheet-form first resin members 141 are disposed between the lower cover 130 and the protective panel 140, the gap between the lower cover 130 and the protective panel 140 may be set to a predetermined distance.

The above description illustrates an example in which the lower cover 130 and the protective panel 140 are joined by the joining of the adhesive material included in the second resin members 142. However, the lower cover 130 and protective panel 140 may also be joined by a publicly known method such as fastening or the like.

The lower cover 130 and protective panel 140 may each be a single body, and may each be an assembled body in which separate members are assembled beforehand.

The first resin members may include an adhesive material, in which case the first resin members may be joined to at least one of the lower cover 130 and the protective panel 140 by being disposed on the at least one of the lower cover 130 and the protective panel 140.

### - Operation and Effects of the First Exemplary Embodiment -

Now, operation and effects of the storage battery apparatus 100 according to the first exemplary embodiment are described.

The storage battery apparatus 100 according to the first exemplary embodiment has a structure in which, as shown in Fig. 2, at least some of the storage battery modules 110 containing the plural storage cells 111 are accommodated by the upper cover 120 and the lower cover 130, and the lower cover 130 and the protective panel 140 are joined together. As shown in Fig. 4, a gap in the vertical direction is provided at least at portions of the lower cover 130 and protective panel 140.

In the gap between the lower cover 130 and the protective panel 140, the first resin members 141 are disposed to extend in the front-and-rear direction in contact with one of the lower cover 130 and the protective panel 140. According to this structure, rigidity of the lower cover and the protective panel, specifically bending rigidity and even more specifically geometrical moment of inertia, may be improved while an increase in weight of the storage battery apparatus 100 is restrained. When, for example, a load is applied to the storage battery apparatus 100 from outside due to road surface interference or the like, effects on the interior of the storage battery apparatus 100 and particularly on the storage cells 111 may be suppressed.

In the storage battery apparatus 100 according to the first exemplary embodiment, the second resin members 142 are disposed in the gap between the lower cover 130 and the protective panel 140 to extend in the front-and-rear direction in contact with one of the lower cover 130 and the protective panel 140. The second resin members 142 have a lower Young's modulus than the first resin members 141. According to this structure, regions that transmit relatively more of a load applied to the protective panel 140 to the lower cover 130 and regions that absorb relatively more of the load applied to the protective panel 140 are formed. Thus, deformation locations of the protective panel 140 may be specified easily, and when a load is applied to the storage battery apparatus 100 from outside, effects on the interior of the storage battery apparatus 100 and particularly on the storage cells 111 may be suppressed.

In the storage battery apparatus 100 according to the first exemplary embodiment, the second resin members 142 include the adhesive material. According to this structure, adhesion locations between the lower cover 130 and protective panel 140 may be increased in number and adhesion strength between the lower cover 130 and protective panel 140 may be improved without a number of fastening components increasing.

In the storage battery apparatus 100 according to the first exemplary embodiment, the first resin members 141 are plurally disposed in a row in the left-and-right direction, and the second resin members 142 are disposed to be interspersed with the plural first resin members 141. According to this structure, plural locations at which a load is transmitted when the protective panel 140 deforms upward may be provided even while an increase in weight of the storage battery apparatus 100 is restrained. Therefore, a gap between the lower cover 130 and protective panel 140 to allow the protective panel 140 to deform and absorb an applied load may be reduced, and the storage battery apparatus 100 may be reduced in size.

The storage battery apparatus 100 according to the first exemplary embodiment has a structure that includes the plural storage battery modules 110 in which the plural storage cells 111 are disposed in rows. The plural storage battery modules 110 are arrayed in the left-and-right direction, and the reinforcements 131 extend in the front-and-rear direction between the plural storage battery modules 110 in the left-and-right direction. The first resin members 141 are disposed to be superposed in the vertical direction with the reinforcements 131. According to this structure, when a load is applied to the storage battery apparatus 100 from outside, the applied load may be transmitted to the reinforcements 131 that have relatively high rigidity inside the storage battery apparatus 100. Thus, effects on the interior of the storage battery apparatus 100, particularly on the storage cells 111, may be suppressed further.

In the storage battery apparatus 100 according to the first exemplary embodiment, at least one of the second resin members 142 is disposed to be superposed with the reinforcement 131 in the vertical direction. According to this structure, when a load is applied to the storage battery apparatus 100 from outside, the load is transmitted to the reinforcement 131 that is relatively high in rigidity. Thus, effects on the interior of the storage battery apparatus 100, particularly on the storage cells 111, may be suppressed further.

In the storage battery apparatus 100 according to the first exemplary embodiment, at least one of the first resin members is disposed to be superposed with the storage cells 111 in the vertical direction. According to this structure, when a load is applied to the storage battery apparatus 100 from outside, an excessive deformation amount of the protective panel 140 below the storage cells 111 may be suppressed. Thus, effects on the interior of the storage battery apparatus 100, particularly on the storage cells 111, may be suppressed further.

### - Second Exemplary Embodiment -

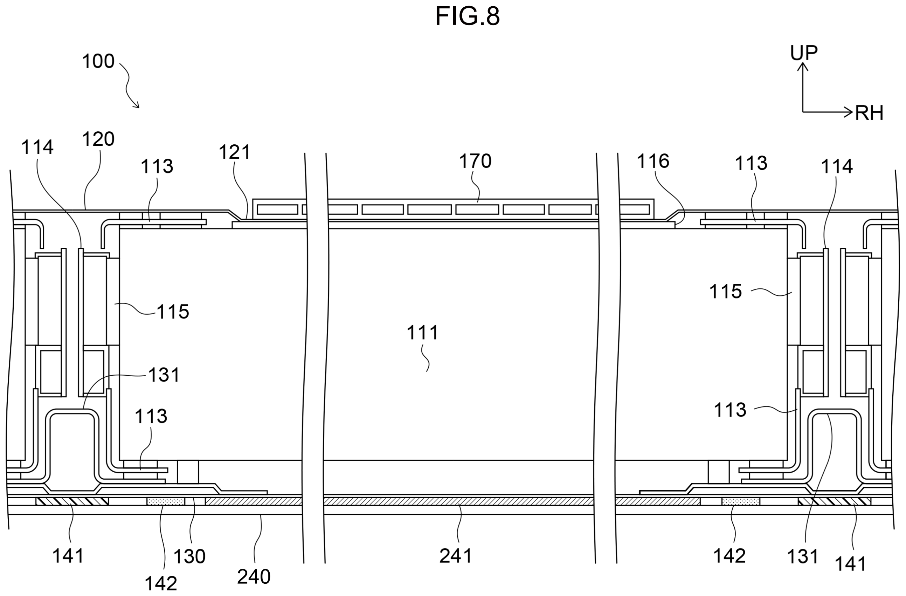

Fig. 8 is a sectional diagram in which a storage battery apparatus 200 according to a second exemplary embodiment is seen in the front-and-rear direction. The storage battery apparatus 200 according to the second exemplary embodiment includes a plural number of the first resin members 141. The plural first resin members 141 include at least one first fiber-containing resin member 241. The first fiber-containing resin member 241 is at least one of the plurally provided first resin members 141. The first resin member 141 that is the first fiber-containing resin member 241 contains a fiber material. Apart from the above descriptions, structures of the storage battery apparatus according to the second exemplary embodiment are substantially the same as in the first exemplary embodiment.

The fiber material is constituted of, for example, at least one type of fiber selected from the group consisting of para-aramid fibers, meta-aramid fibers, polymer polyethylene fibers, polyarylate fibers, polyvinyl alcohol (PVA) fibers, polypara -phenylene benzobisoxazole (PBO) fibers, polyphenylene sulfide (PPS) fibers, polyimide fibers, PAN carbon fibers, pitch carbon fibers, glass fibers, boron fibers, silicon carbide fibers and so forth.

The first fiber-containing resin member 241 is a structure with higher strength than the first resin member 141. The meaning of the term "higher strength" as used herein is intended to include, for example, one or more of tensile strength, compressive strength, bending strength and the like being relatively higher.

The first fiber-containing resin member 241 is disposed to be superposed with the storage cells 111 in the vertical direction. The first fiber-containing resin member 241 is disposed to be superposed in the vertical direction with central portions of the storage cells 111 in the left-and-right direction.

The first fiber-containing resin member 241 is disposed to extend in the left-and-right direction at least from one to another of adjacent reinforcements 131. The first fiber-containing resin member 241 is disposed to be superposed in the vertical direction with a sixth flat portion (and eighth flat portion) of the reinforcements 131.

### - Operation and Effects of the Second Exemplary Embodiment -

Now, operation and effects of the storage battery apparatus 200 according to the second exemplary embodiment are described.

In the storage battery apparatus 200 according to the second exemplary embodiment, as shown in Fig. 8, at least a portion of a storage battery module 210 containing plural storage cells is accommodated by an upper cover 120b and the lower cover 130. The lower cover 130 and a protective panel 240 are joined together. A gap is formed in the vertical direction at least at portions between the lower cover 130 and the protective panel 240.

In at least portions of the gap between the lower cover 130 and the protective panel 240, the first resin members 141 are disposed to extend in the front-and-rear direction in contact with one of the lower cover 130 and the protective panel 240. The first resin members 141 include at least one of the first fiber-containing resin member 241 containing the fiber material. The first fiber-containing resin member 241 is disposed to be superposed in the vertical direction with the storage cells 111. According to the structure described above, strength between the lower cover 130 and the protective panel 240 is improved. Consequently, when a load is applied to the storage battery apparatus 200 from outside, effects on the interior of the storage battery apparatus 200, particularly on the storage cells 111, may be suppressed.

In the storage battery apparatus 200 according to the second exemplary embodiment, as seen in a first direction, the first fiber-containing resin member 241 is formed to extend from the reinforcement 131 that is disposed at one end portion of the storage battery module 210 in a second direction to the reinforcement 131 that is disposed at another end portion of the storage battery module 210 in the second direction. According to this structure, when a load is applied to the storage battery apparatus 200 from outside, effects on the interior of the storage battery apparatus 200, particularly on the storage cells 111, may be suppressed further.

### - Third Exemplary Embodiment -

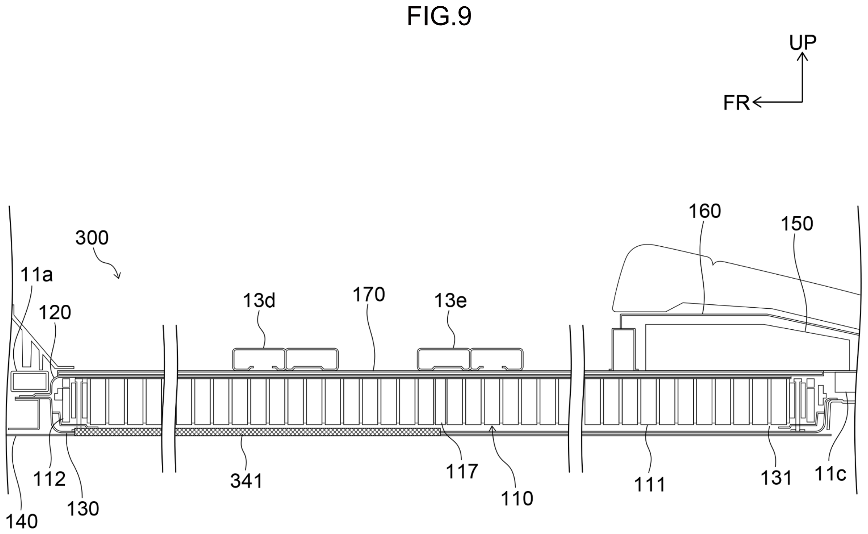

Fig. 9 is a sectional diagram in which a storage battery apparatus 300 according to a third exemplary embodiment is seen in the left-and-right direction. In the storage battery apparatus 300 according to the third exemplary embodiment, a first fiber-containing resin member 341 is disposed from an end portion at the front side of each storage battery module 110 to a central portion in the front-and-rear direction of the storage battery module 110. Apart from the above descriptions, structures of the storage battery apparatus according to the third exemplary embodiment are substantially the same as in the first exemplary embodiment.

The storage battery module 110 has a structure in which an intermediary member 117 is provided between a pair of adjacent storage cells 111.

The intermediary member 117 is a frame member formed of, for example, a metal such as iron, aluminium or the like. The intermediary member 117 is connected to, for example, end plates 112c and side plates 113c, and suppresses deformation of the storage cells 111 in the front-and-rear direction.

The intermediary member 117 is disposed to project beyond the storage cells 111 in, for example, one or both directions in the left-and-right direction. The intermediary member 117 may also be disposed to project beyond the storage cells 111 in, for example, one or both directions in the vertical direction.

The intermediary member 117 may be disposed at the middle of the storage battery module 110 in the front-and-rear direction. When the storage battery module 110 contains n of the intermediary member 117, the n intermediary members 117 may be disposed to divide the storage battery module 110 into n+1 equal portions in the front-and-rear direction.

The first fiber-containing resin member 341 is disposed to extend in the front-and-rear direction at least from the end portion at the front side of the storage battery module 110 to the intermediary member 117. The meaning of "is disposed ... from the end portion at the front side of the storage battery module 110 to the intermediary member 117", is intended to include the first fiber-containing resin member 341 being disposed at least from the front side end portion of the storage battery module 110 to the intermediary member 117.

### - Operation and Effects of the Third Exemplary Embodiment -

Now, operation and effects of the storage battery apparatus 300 according to the third exemplary embodiment are described.

In the storage battery apparatus 300 according to the third exemplary embodiment, as shown in Fig. 9, the first fiber-containing resin member 341 is disposed from the front side end portion of the storage battery module 110 to the front-and-rear direction central portion of the storage battery module 110. According to the structure described above, when a load is applied to the storage battery apparatus 300 from outside, a portion of the load applied from outside that is relatively more likely to act on the storage battery apparatus 300, due to road surface interference or the like, is more excellently protected against. Thus, effects on the interior of the storage battery apparatus 300, particularly on the storage cells 111, may be suppressed further.

The storage battery apparatus 300 according to the third exemplary embodiment has a structure in which the intermediary member 117 is provided at least in a portion between adjacent storage cells 111 of the storage cells 111 serving as the storage battery module 110. In addition, the first fiber-containing resin member 341 is disposed to extend in the front-and-rear direction at least from the front side end portion of the storage battery module 110 to the intermediary member 117. According to the structure described above, when a load is applied to the storage battery apparatus 300 from outside, a portion of the load applied from outside that is relatively more likely to act on the storage battery apparatus 300, due to road surface interference or the like, is more excellently protected against. Thus, effects on the interior of the storage battery apparatus 300, particularly on the storage cells 111, may be suppressed further.

### - Fourth Exemplary Embodiment -

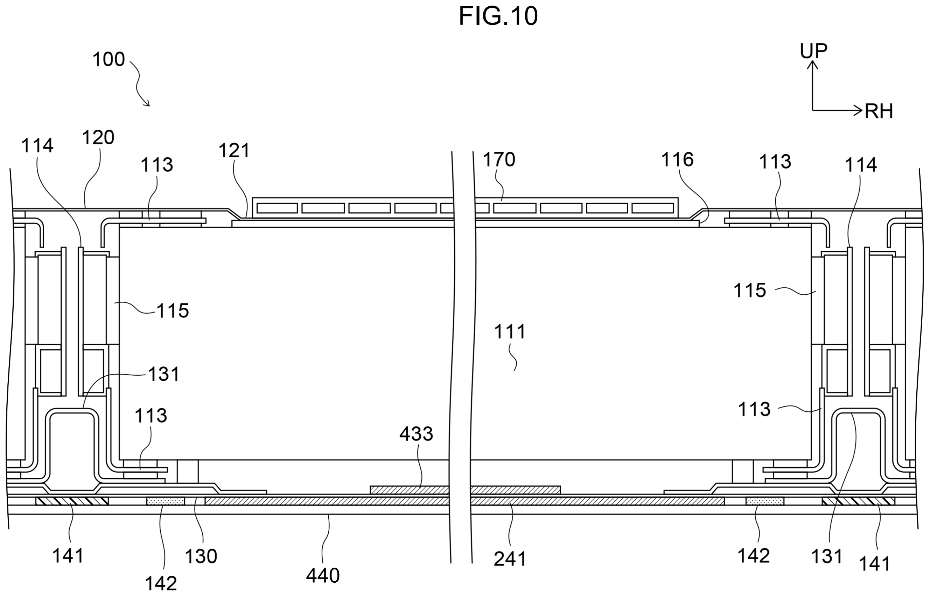

Fig. 10 is a sectional diagram in which a storage battery apparatus 400 according to a fourth exemplary embodiment is seen in the front-and-rear direction. The storage battery apparatus 400 according to the fourth exemplary embodiment includes, in addition to the first fiber-containing resin member 241 disclosed in the second exemplary embodiment, a second fiber-containing resin member 433. The second fiber-containing resin member 433 is structured as a resin member containing a fiber material. Apart from the above descriptions, structures of the storage battery apparatus according to the fourth exemplary embodiment are substantially the same as in the second exemplary embodiment.

The fiber material is constituted of, for example, at least one type of fiber selected from the group consisting of para-aramid fibers, meta-aramid fibers, polymer polyethylene fibers, polyarylate fibers, polyvinyl alcohol (PVA) fibers, polypara-phenylene benzobisoxazole (PBO) fibers, polyphenylene sulfide (PPS) fibers, polyimide fibers, PAN carbon fibers, pitch carbon fibers, glass fibers, boron fibers, silicon carbide fibers and so forth.

The second fiber-containing resin member 433 is a structure with higher strength than the first resin member 141. The meaning of the term "higher strength" as used herein is intended to include, for example, one or more of tensile strength, compressive strength, bending strength and the like being relatively higher.

The second fiber-containing resin member 433 is joined to the lower cover 130 at a face (an upper face) of the lower cover 130 that opposes the storage cells 111. In this structure, the first resin members 141 may be disposed between the lower cover 130 and a protective panel 440, without the first fiber-containing resin member 241.

The second fiber-containing resin member 433 is disposed to be superposed with the storage cells 111 in the vertical direction. The second fiber-containing resin member 433 is disposed to be superposed in the vertical direction with central portions of the storage cells 111 in the left-and-right direction.

### - Operation and Effects of the Fourth Exemplary Embodiment -

Now, operation and effects of the storage battery apparatus 400 according to the fourth exemplary embodiment are described.

In the storage battery apparatus 400 according to the fourth exemplary embodiment, as shown in Fig. 10, the first fiber-containing resin member 241 is joined to the lower cover 130 at a face (upper face) of the first fiber-containing resin member 241 that opposes the storage cells 111. The first fiber-containing resin member 241 is disposed to be superposed with the storage cells 111 in the vertical direction. According to the structure described above, strength of the lower cover 130 may be improved and, when a load is applied from outside the storage battery apparatus 400, the storage battery apparatus 400 may be more excellently protected. Thus, effects on the interior of the storage battery apparatus 400, particularly on the storage cells 111, may be suppressed further.

### - Fifth Exemplary Embodiment -

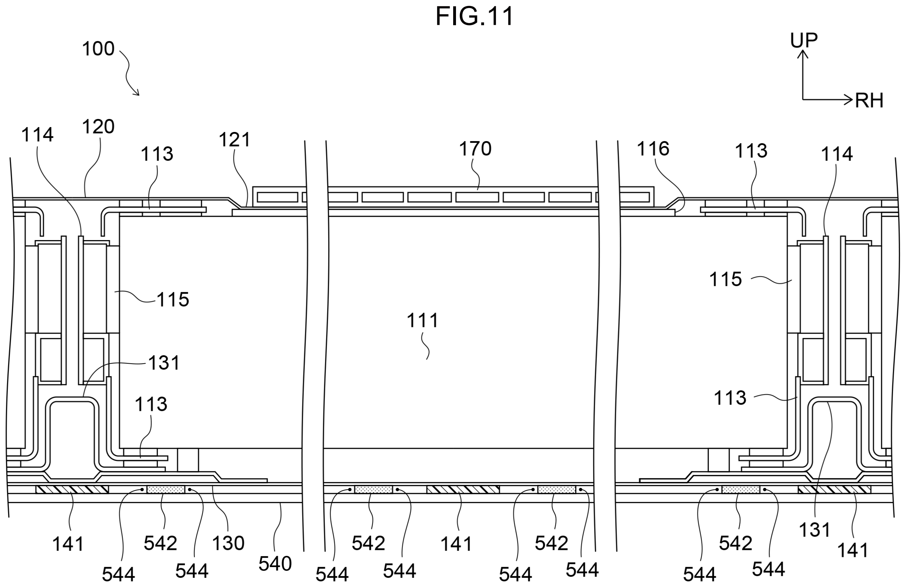

Fig. 11 is a sectional diagram in which a storage battery apparatus 500 according to a fifth exemplary embodiment is seen in the front-and-rear direction. The storage battery apparatus 500 according to the fifth exemplary embodiment includes wire members 544. Second resin members 542 include an adhesive material. At least a portion of each second resin member 542 is joined to the lower cover 130. At least a portion of the second resin member 542 is joined to a protective panel 540. Apart from the above descriptions, structures of the storage battery apparatus according to the fifth exemplary embodiment are substantially the same as in the first exemplary embodiment.

Each wire member 544 is structured to extend in the front-and-rear direction. The wire member 544 is formed of, for example, a high-strength metal, resin or the like. As a more specific example, the wire member 544 is formed of piano wire.

The wire members 544 are disposed adjacent to the second resin member 542 at both ends of the second resin member 542 in the left-and-right direction. The wire members 544 may be joined between the lower cover 130 and the protective panel 540 by, for example, an adhesive material or the like.

By a worker (or a work mechanism) moving the wire members 544 in arbitrary directions, joining between the lower cover 130 and the protective panel 540 may be made easier to release or may be released.

The wire members 544 are disposed further to the front than the second resin members 542 in the front-and-rear direction. The wire members 544 may be disposed further to the rear than the second resin members 542 in the front-and-rear direction. At least portions of the wire members 544 may project outside the storage battery apparatus 500, for example, projecting to the front or rear from between the lower cover 130 and the protective panel 540. This structure may make replacing the protective panel 540, that is, releasing the joining between the lower cover 130 and the protective panel 540, easier.

The first resin members 141 may be joined to only one of the lower cover 130 and the protective panel 540. When the first resin members 141 include an adhesive material similarly to the second resin members 542 and join between the lower cover 130 and the protective panel 540, the wire members 544 may be further disposed at both ends of the first resin members 141 in the left-and-right direction.

The above description illustrates an example in which each second resin member 542 includes the adhesive material, at least a portion of the second resin member 542 is joined to the lower cover 130, and at least a portion of the second resin member 542 is joined to the protective panel 540. Instead of the second resin members 542, the first resin members 141 may include the adhesive material, with at least portions of the first resin members 141 being joined to the lower cover 130 and at least portions of the first resin members 141 being joined to the protective panel 540. In this structure, the wire members 544 may be disposed adjacent to the second resin members 542 at both ends of the first resin members 141 in the left-and-right direction.

### - Operation and Effects of the Fifth Exemplary Embodiment -

Now, operation and effects of the storage battery apparatus 500 according to the fifth exemplary embodiment are described.

In the storage battery apparatus 500 according to the fifth exemplary embodiment, as shown in Fig. 11, the wire members 544 are disposed at both ends of the second resin members 542 in the left-and-right direction. According to the structure described above, if the protective panel 540 has been damaged by application of a load from outside the storage battery apparatus 500, the joining of the protective panel 540 to the lower cover 130 may be easily released. Thus, ease of servicing of the storage battery apparatus 500 may be improved.

### - Sixth Exemplary Embodiment -

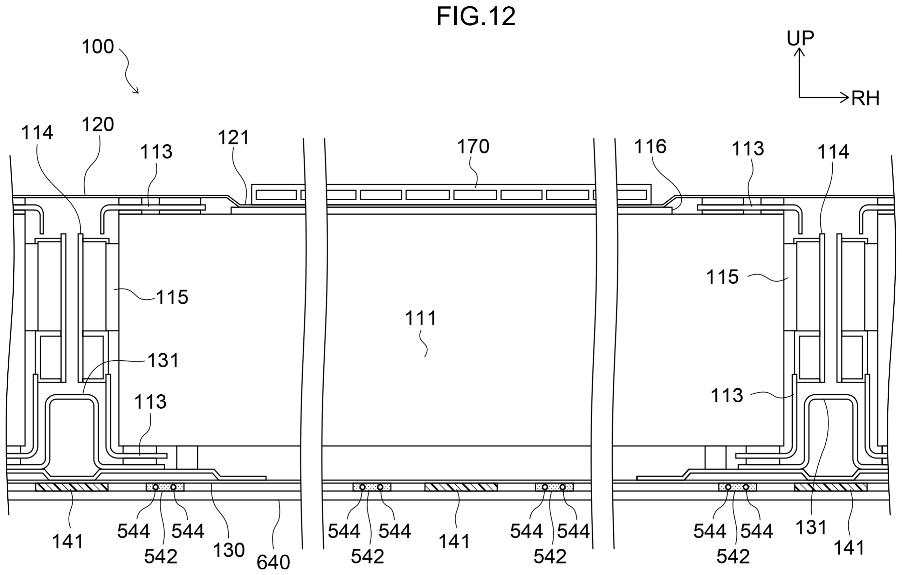

Fig. 12 is a sectional diagram in which a storage battery apparatus 600 according to a sixth exemplary embodiment is seen in the front-and-rear direction. The storage battery apparatus 600 according to the sixth exemplary embodiment includes wire members 644. At least portions of the wire members 644 are disposed to be covered by second resin members 642. In this Description, unless specifically described otherwise, the meaning of "disposed to be covered" is intended to include at least a portion being disposed to be covered. Apart from the above descriptions, structures of the storage battery apparatus according to the sixth exemplary embodiment are substantially the same as in the first exemplary embodiment.

The wire members 644 may be disposed to be covered by the second resin members 642 by, for example, a paste for the second resin members 642 being coated onto one of the lower cover 130 and a protective panel 640, the wire members 644 being arranged before the paste hardens, and the lower cover 130 and protective panel 640 being superposed.

By a worker (or a work mechanism) moving the wire members 644 in arbitrary directions, joining between the lower cover 130 and the protective panel 640 may be made easier to release or may be released.

The wire members 644 are disposed further to the front than the second resin members 642 in the front-and-rear direction. The wire members 644 may be disposed further to the rear than the second resin members 642 in the front-and-rear direction. At least portions of the wire members 644 may project outside the storage battery apparatus 600, for example, projecting to the front or rear from between the lower cover 130 and the protective panel 640. This structure may make replacing the protective panel 640, that is, releasing the joining between the lower cover 130 and the protective panel 640, easier.

The first resin members 141 may be joined to only one of the lower cover 130 and the protective panel 640. When the first resin members 141 include an adhesive material similarly to the second resin members 642 and join between the lower cover 130 and the protective panel 640, at least portions of the wire members 644 may be disposed to be covered by the first resin members 141.

The above description illustrates an example in which each second resin member 642 includes the adhesive material, at least a portion of the second resin member 642 is joined to the lower cover 130, and at least a portion of the second resin member 642 is joined to the protective panel 640. Instead of the second resin members 642, the first resin members 141 may include the adhesive material, with at least portions of the first resin members 141 being joined to the lower cover 130 and at least portions of the first resin members 141 being joined to the protective panel 640. In this structure, at least portions of the wire members 644 may be disposed to be covered by the first resin members 141.

### - Operation and Effects of the Sixth Exemplary Embodiment -

Now, operation and effects of the storage battery apparatus 600 according to the sixth exemplary embodiment are described.

In the storage battery apparatus 600 according to the sixth exemplary embodiment, as shown in Fig. 12, at least a portion of each wire member 644 is structured to be covered by the second resin member 642 including the adhesive material. According to the structure described above, if the protective panel 640 has been damaged by application of a load from outside the storage battery apparatus 600, the joining of the protective panel 640 to the lower cover 130 may be easily released. Thus, ease of servicing of the storage battery apparatus 600 may be improved.

It should be understood that the foregoing disclosed embodiments are all exemplary and are not limiting. The scope of the present disclosure is intended to be defined by the following claims and to encompass all modifications within the meaning and scope of equivalents to the claims.

## Claims

1. A storage battery apparatus (100, 200, 300, 400, 500, 600) comprising:
a plurality of storage cells (111);
a first cover (130) disposed below the plurality of storage cells (111);
a second cover (140) disposed below the first cover (130); and
a first resin member (141) disposed between the first cover (130) and the second cover (140), the first resin member (141) being in contact with both the first cover (130) and the second cover (140).

2. The storage battery apparatus (100, 200, 300, 400, 500, 600) according to claim 1, wherein the first resin member (141) is disposed to extend in a first direction that is orthogonal to a vertical direction.

3. The storage battery apparatus (100, 200, 300, 400, 500, 600) according to claim 2, wherein the first resin member (141) is disposed at an inner side relative to respective peripheral edge portions of the first cover (130) and the second cover (140).

4. The storage battery apparatus (100, 200, 300, 400, 500, 600) according to claim 2, wherein a plurality of first resin members (141) are provided, the plurality of first resin members (141) being disposed in a row in a second direction that is orthogonal to both the vertical direction and the first direction.

5. The storage battery apparatus (100, 200, 300, 400, 500, 600) according to claim 2, wherein the first resin member (141) is joined to both the first cover (130) and the second cover (140).

6. The storage battery apparatus (100, 200, 300, 400, 500, 600) according to any one of claims 2 to 5, further comprising a first reinforcement (131) disposed to extend in the first direction at one side of the storage cells (111) in a second direction that is perpendicular to the first direction,
wherein the first resin member (141) is disposed to be superposed with the first reinforcement (131) as seen in the vertical direction.

7. The storage battery apparatus (100, 200, 300, 400, 500, 600) according to claim 6, wherein the first resin member (141) is disposed to be superposed with the storage cells (111) as seen in the vertical direction.

8. The storage battery apparatus (100, 200, 300, 400, 500, 600) according to claim 6, wherein the first resin member (141) includes a first fiber-containing resin member (241, 341) that includes a fiber material, the first fiber-containing resin member (241, 341) being disposed to be superposed with the storage cells (111) as seen in the vertical direction.

9. The storage battery apparatus (100, 200, 300, 400, 500, 600) according to claim 6, further comprising a second resin member (142, 542) between the first cover (130) and the second cover (140), the second resin member (142, 542) being disposed to extend in the first direction,
wherein the second resin member (142, 542) is in contact with both the first cover (130) and the second cover (140), and
wherein the second resin member (142, 542) has a smaller Young's modulus than the first resin member (141).

10. The storage battery apparatus (100, 200, 300, 400, 500, 600) according to claim 6, further comprising a second resin member (142, 542) between the first cover (130) and the second cover (140), the second resin member (142, 542) being disposed to extend in the first direction,
wherein the second resin member (142, 542) includes an adhesive material, and
wherein the second resin member (142, 542) is joined to both the first cover (130) and the second cover (140).

11. The storage battery apparatus (100, 200, 300, 400, 500, 600) according to claim 10, wherein:
a plurality of first resin members (141) are disposed in a row in the second direction, the second direction intersecting the first direction, and
the second resin member (142, 542) is disposed to be interspersed with the plurality of first resin members.

12. The storage battery apparatus (100, 200, 300, 400, 500, 600) according to any one of claims 9 to 11, wherein the second resin member (142, 542) is disposed to be superposed with the first reinforcement (131) in the vertical direction.

13. The storage battery apparatus (100, 200, 300, 400, 500, 600) according to claim 8, further comprising a second reinforcement (131) disposed to extend in the first direction at another side of the storage cells (111) in the second direction,
wherein the first fiber-containing resin member (241, 341) is disposed to extend in the second direction from the first reinforcement (131) to the second reinforcement (131) as seen in the first direction.

14. The storage battery apparatus (100, 200, 300, 400, 500, 600) according to claim 8, further comprising a second fiber-containing resin member (433) that includes a fiber material,
wherein the second fiber-containing resin member (433) is disposed to be superposed with the storage cells (111) as seen in the vertical direction, and is joined to an upper face of the first cover (130).

15. The storage battery apparatus (100, 200, 300, 400, 500, 600) according to claim 12, further comprising a wire member (544, 644) disposed to extend in the first direction,
wherein the first resin member (141) is joined to the first cover (130) and the second cover (140), and
wherein the wire member (544, 644) is disposed at one side of the first resin member (141) in the second direction.
